# EUROPEAN PATENT APPLICATION

(11) **EP 4 778 387 A2**
(43) Date of publication of application: **22.07.2026**
(21) Application number: 26182986.5
(22) Date of filing: 13.06.2023
(51) Int. Cl.: A01G 31/02

(54) **TRAY FOR A TRAY ASSEMBLY FOR CULTIVATING HORTICULTURAL CROPS**

(30) Priority: 13.06.2022 NL 2032144
(62) Divisional of application: 23732224.3
(71) Applicant: Meteor Systems B.V., 4817 ZK Breda (NL)
(72) Inventor: DIRVEN, Sebastiaan, BREDA (NL)
(74) Representative: Arnold & Siedsma

(57) **Abstract**

The herein disclosed invention relates to a tray (3) for a tray assembly (1) for cultivating horticultural crops, the tray (3) comprising: a reservoir (5) configured to contain water and to receive one or more than one float (7) in the reservoir (5) to substantially shield water contained in the reservoir (5) from the external environment, wherein the one or more than one float (7) is configured to receive one or more than one plant and to be arranged in the reservoir (5) and substantially shield water contained in the reservoir (5) from the external environment; and a water inlet section (9) that is arranged adjacent the reservoir (5) and comprising a water flow guide (11), wherein the water flow guide (11) at least one of: defines a downward sloping guide surface (13) configured to guide water received on the water flow guide (11) into the reservoir (5) under a level at which the one or more than one float (7) is arrangeable in the reservoir (5); and comprises a throughflow opening (15) configured to guide water into a chamber (17) of the water inlet section (9) that is in fluid connection with the reservoir (5), wherein the throughflow opening (15) comprises a water permeable membrane (25) configured to substantially shield water within the water inlet section (9) from the external environment. The herein disclosed invention moreover relates to a horticultural method comprising usage of such a tray (3).

## Description

The present invention relates to a tray for a tray assembly for cultivating horticultural crops, in particular in absence of a growth medium (e.g. soil, vermiculite, perlite, rockwool/stonewool or the like).

Recent developments in the field of horticulture have led to an increased adoption of soil-less cultivation systems and methods with which horticultural crops are not raised in a growth medium, but rather have water containing nutrients and/or oxygen fed directly to their roots. Over the years, a great variety of different techniques (i.e. systems and methods) for cultivating horticultural crops in absence of a growth medium have been developed. These techniques are collectively referred to as "hydroponics". Examples of hydroponic techniques include wicking systems, deep water culture, nutrient film techniques, ebb and flow systems, drip systems and aeroponics, in which the roots of horticultural crops are kept in an environment saturated with an aerosol or mist of nutrient solution.

Hydroponics comprise a number of advantages over traditional soil-based cultivation techniques, including reduced costs, reduced water consumption, a reduced need to apply pesticides due to the absence of soil, and increased control over the amount of nutrients that are fed to the plants. Notwithstanding these advantages, cultivation techniques based on hydroponics do impose certain challenges that relate to the usage of the nutrient solution (i.e. water having plant nutrients dissolved therein) used to feed the plants. These challenges include the tendency of algae to develop in the nutrient solution and moreover retaining the nutrient solution in the vicinity of crop plant roots. In a commercial, highly efficient and automated horticultural setting these challenges are considered to be particularly relevant in relation to filling and/or draining of containers in which the crops are contained with water (i.e. nutrient solution).

An objective of the present invention is to provide means with which one or more of such disadvantages of known horticultural assemblies are diminished or abated.

This objective is achieved with a tray for a tray assembly for cultivating horticultural crops, the tray comprising:
- a reservoir configured to contain water and to receive one or more than one float in the reservoir to substantially shield water contained in the reservoir from the external environment, wherein the one or more than one float is configured to receive one or more than one plant and to be arranged in the reservoir and substantially shield water contained in the reservoir from the external environment; and
- a water inlet section that is arranged adjacent the reservoir and comprises a water flow guide, wherein the water flow guide at least one of:
   - defines a downward sloping guide surface configured to guide water received on the water flow guide into the reservoir under a level at which the one or more than one float is arrangeable in the reservoir; and
   - comprises a throughflow opening configured to guide water into a chamber of the water inlet section that is in fluid connection with the reservoir, wherein the throughflow opening comprises a water permeable membrane configured to substantially shield water within the water inlet section from the external environment.

With the hereabove defined tray, a tray assembly can be formed by arranging one or more than one float in the reservoir of the tray, and water contained in the water reservoir of the tray can at all times be shielded from the external environment by the floats and/or the water flow guide. Simultaneously, the tray assembly according to the present invention allows for easy (e.g. automated) filling, refilling and draining of the water reservoir with little risk of spilling or leaking of water.

Within the context of the present invention and disclosure, the phrase "shielded from the external environment" should be understood as not being exposed to ambient light and/or ambient air, or at least having a significantly reduced exposure thereto. Shielding water contained in the reservoir from ambient light inhibits the growth of algae in the water reservoir, whereas shielding this water from ambient air helps to retain oxygen dissolved in this water so that it is accessible to the plants.

The tray and the tray assembly are advantageous regardless of the type of watering scheme that is used to water the plants cultivated using the tray assembly. For example, a watering scheme may be used in which the reservoir is at all times at least partially filled with water that is periodically or continuously refreshed. Shielding this water from the external environment results in reduced algae growth and increased retainment of oxygen dissolved in this water. Alternatively, a watering scheme may be selected in which the reservoir is approximately entirely filled with water and subsequently drained. Here, the shielding of the residual water likewise reduces the development of algae and/or fungi, but more importantly helps to maintain a humid environment within the reservoir for feeding the plants.

According to an embodiment of the tray or tray assembly in which the water flow guide defines the downward sloping guide surface configured to guide water received on the water flow guide into the reservoir under the one or more than one float, the downward sloping guide surface extends substantially along an entire side of the tray. In these embodiments, it is possible to fill the reservoir relatively quickly along the entire length of the tray with little chance of water being spilled.

According to a further embodiment of the tray or tray assembly, at least of a part of the downward sloping guide surface that is arranged within the water inlet section is arranged above a maximum water level of the reservoir. In these embodiments, the part of the downward sloping guide surface that is arranged within the water inlet section and exposed to the external environment remains unsubmerged at all times and easily dries after filling of the reservoir. Another part of the downwards sloping guide surface, in particular in a water flow direction opposite the part that is arranged above the maximum water level of the reservoir, may be arranged at or below a level at which the one or more than one float is arrangeable in the reservoir of the tray. Water may then flow along the downward sloping guide surface under the one or more than one floats, when arranged in the reservoir.

According to a further embodiment of the tray or tray assembly, the tray comprises a throughput reservoir arranged downstream of the downward sloping guide surface. This throughput reservoir collects water as it is fed into the water inlet section and then evenly distributes this water into the reservoir.

According to a further embodiment of the tray or tray assembly, a mesh is arranged at the throughput reservoir. This mesh arranged at the throughput reservoir collects debris that may have fallen into the water inlet section and otherwise would have been carried away by the flowing water into the reservoir.

According to a further embodiment of the tray or tray assembly, the water flow guide comprises the throughflow opening that is configured to guide water into a chamber of the water inlet section that is in fluid connection with the reservoir.

Like in the hereabove alternative embodiment of the tray or tray assembly, water present in the tray is shielded from the external environment to thereby inhibit growth of algae and/or fungi, retain dissolved oxygen in said water, and/or maintain a humid environment at the plant roots; with water present in the water inlet section being shielded by the water flow guide.

The throughflow opening preferably comprises a water permeable membrane configured to substantially shield water within the water inlet section from the external environment. Even more preferably, the water permeable membrane comprises one or more than one flap of a flexible material. This one or more than one flap is easily pushed aside by an incoming waterflow from, for example, a(n) (automated) watering system to facilitate filling of the reservoir. When filling of the reservoir has been completed, the one or more than one flexible flap reassumes an initial position in which it substantially seals off the throughflow opening of the water flow guide.

According to a further embodiment of the tray or tray assembly, the flexible material of the water permeable membrane is non-translucent material. Light is then prevented from passing through the water permeable membrane, favoring protection against algae growth and/or keeping roots of the cultivated plants in the dark.

According to a further embodiment of the tray of tray assembly, a top surface of the water flow guide exhibits a downward slope in a direction toward the reservoir of the tray. **In** these embodiments, water that misses the throughflow opening and is spilled onto a top surface of the water flow guide may easily flow off the water flow guide and into the reservoir of the tray.

According to a further embodiment of the tray or tray assembly, the water flow guide is removably insertable into the tray.

According to a further embodiment of the tray assembly, at least one of the insertable water flow guide and the tray comprises a recess defining the fluid connection between the reservoir and the water inlet section of the tray.

According to a further embodiment of the tray or tray assembly, a bottom of the tray comprises one or more than one support protruding upward relative to the bottom and configured to support the one or more than one float. **In** these embodiments, the one or more than one float is elevated above the bottom of the tray even when the reservoir has been completely drained. As such, a humid environment for feeding the plants can be maintained in the space between the bottom of the tray and the one or more than one float.

According to a further embodiment of the tray or tray assembly, the one or more than one support comprises a through hole. A lifting mechanism comprising one or more than one extraction pin that is aligned, or configured to be aligned, with said through hole of the one or more than one support may be configured to move said one or more than one extraction pin through the through hole of the one or more than one support and to abut the one or more than one float, to thereby lift the one or more than one float out of the tray.

According to a further embodiment of the tray or tray assembly, the lifting mechanism is comprised by a frame configured to support at least the tray. Alternatively, the lifting mechanism may be provided separately from the tray or tray assembly, for example as a moveable device arrangeable under the tray.

According to a further embodiment of the tray or tray assembly, the tray further comprises a drain configured to drain water from the reservoir of the tray. The drain may comprise a siphon, in particular a bell siphon.

According to a further embodiment of the tray or tray assembly, the drain comprises an additional mesh.

According to a further embodiment of the tray or tray assembly, the drain is arranged at the water inlet section.

According to a further embodiment of the tray or tray assembly, the drain and the water inlet section are arranged at opposing sides of the tray.

A tray assembly for cultivating horticultural crops may comprise a tray according to any of the embodiments disclosed herein and one or more than one float configured to receive one or more than one plant, wherein the one or more than one float is arranged or arrangeable in the reservoir of the tray to substantially shield water contained in the reservoir from the external environment. The one or more than one floats may in particular be according to any of the embodiments of the float and/or tray assembly disclosed herein.

The objective of the present invention is furthermore achieved with a horticultural system, comprising one or more than one tray or tray assembly according to any one of the hereabove embodiments and a watering device configured to introduce water into the water inlet section of the tray.

According to a further embodiment of the horticultural system, a water outlet of the watering system comprises a faucet aerator configured to aerate a water stream of the water outlet. This advantageously enables aeration of water introduced into the reservoir of the tray, which is otherwise shielded from the external environment. Separate aeration devices may be omitted.

The objective of the present invention is furthermore achieved with a horticultural method comprising usage of a tray, a tray assembly or a horticultural system according to any of the embodiments disclosed herein.

The present disclosure also provides a favorable combination of some of the above features related to the supports and the lifting mechanism in alternative embodiments of the tray, the one or more than one float and a tray assembly thereof. The following tray, float and lifting mechanism present a plurality of interrelated products adapted for each other.

A tray is provided for a tray assembly for cultivating horticultural crops. This tray comprises:
- a reservoir configured to contain water and to receive one or more than one float in the reservoir to substantially shield water contained in the reservoir from the external environment, wherein the one or more than one float is configured to receive one or more than one plant and to be arranged in the reservoir and substantially shield water contained in the reservoir from the external environment;
- a drain configured to drain water from the reservoir when a water level in the reservoir reaches a maximum water level; and
- one or more than one support protruding upward relative to a bottom of the reservoir and configured to support the one or more than one float when received in the reservoir, wherein the one or more than one support comprises a through hole arranged above the maximum water level of the reservoir.

The supports of the tray maintain the one or more than float elevated above the bottom of the tray even when the reservoir has been completely drained. This for example safeguard roots of plants accommodated in the floats. The through holes of the tray are favorably arranged above the maximum water level of the reservoir, as determined by the drain, the prevent draining of the reservoir via the through holes in the supports. The through holes enable access to the bottom of the floats, for example for extraction pins of a lifting mechanism to lift floats out of the tray.

According to a further embodiment of the tray, the through hole is arranged at a top surface of the one or more than one support. When the floats come to rest onto the supports, the through holes are blocked. The floats may be particularly configured for this as described below.

It is noted that the above tray may also comprise the water inlet section that is arranged adjacent the reservoir and comprises a water flow guide. As with the embodiments disclosed above, the water flow guide may be at least one of:
- defining a downward sloping guide surface configured to guide water received on the water flow guide into the reservoir under the one or more than one float, or at least under a level at which the one or more than one float is arrangeable in the reservoir; and
- comprises a throughflow opening configured to guide water into a chamber of the water inlet section that is in fluid connection with the reservoir, wherein the throughflow opening preferably comprises the water permeable membrane configured to substantially shield water within the water inlet section from the external environment.

A float is provided for a tray assembly for cultivating horticultural crops. The float is configured to be arranged in the reservoir of a tray according to any of the above embodiments to substantially shield water contained in the reservoir from the external environment. The float comprises:
- one or more than one accommodation configured to receive one or more than one plant; and
- one or more than one recess arranged at a bottom surface of the float and configured to receive the one or more than one support of the tray.

The tray and the float are thus configured for mutual interaction through their recesses and supports, respectively.

According to a further embodiment of the float, the one or more than one recess is formed as a blind hole extending into the float from the bottom surface of the float.

According to a further embodiment of the float, the one or more than one accommodation is formed as a through hole extending from the bottom surface of the float to a top surface of the float.

According to a further embodiment of the float, a cross-section of the one or more than one recess is larger than a cross-section of the one or more than one accommodation. The supports of the tray may then readily slot onto the recesses but not into the accommodations intended for the plants. Cross-section may refer to a diameter for circular accommodations or recesses.

According to a further embodiment of the float, a first two-dimensional pattern defined by the one or more than one recess differs from a second two-dimensional pattern defined by the one or more than one accommodation. This prevents accidental engagement of the supports of the tray into the accommodations of the float rather than in the recesses of the float. A two-dimensional pattern may be formed along the bottom of the tray or the float. Even when only one recess or accommodation is provided, the two-dimensional pattern may refer to the positioning of this single recess or accommodation relative to the float, in particular a circumference of the float.

Further, a tray assembly is provided for cultivating horticultural crops. The tray assembly comprises a tray according to any of the above embodiments and one or more than one float according to any of the above embodiments. Further details of the tray or float are provided below in the context of the tray assembly, which features may also be applied to the tray or float is isolation, i.e. when not part of the tray assembly.

According to a further embodiment of the tray assembly, the one or more than one recess of the float is recessed from the bottom surface of the float over a distance smaller than a height of the one or more than one support of the tray.

According to a further embodiment of the tray assembly, a cross-section of the one or more than one support, in particular measured at its top, of the tray is larger than a cross-section of the one or more than one accommodation of the float, in particular measured at the bottom surface of the float. This prevents the supports of the tray from engaging the accommodations of the floats. More in general, the supports of tray can be dimensions such that these do not fit into the accommodations of the float.

According to a further embodiment of the tray assembly, a third two-dimensional pattern defined by the one or more than one support of the tray corresponds to a first two-dimensional pattern defined by the one or more than one recess of the float and differs from a second two-dimensional pattern defined by the one or more than one accommodation.

According to a further embodiment of the tray assembly, the tray assembly further comprises a lifting mechanism. The lifting mechanism may comprise one or more than one extraction pin that is aligned, or configured to be aligned, with the through hole of the one or more than one support. The lifting mechanism may be configured to move the one or more than one extraction pin through the through hole of the one or more than one support and to abut one or more than one float arrangeable or arranged in the reservoir of the tray and thereby lift the one or more than one float out of the tray. In particular, the one or more extraction pin of the lifting mechanism may be configured to abut the one or more than one recess of the float. Said recess may likewise be configured to be abutted by said pins.

According to a further embodiment of the tray assembly, a fourth two-dimensional pattern defined by the one or more than one extraction pin of the lifting mechanism corresponds to at least one of the third two-dimensional pattern defined by the one or more than one support of the tray and the first two-dimensional pattern defined by the one or more than one recess of the float.

According to a further embodiment of the tray assembly, the lifting mechanism is comprised by a frame configured to support at least the tray. The tray assembly may comprise said frame. Alternatively, the lifting mechanism may be provided separately from the tray or tray assembly.

A lifting mechanism is provided which is adapted for a tray assembly according to any of the embodiments disclosed herein. The lifting mechanism comprises one or more than one extraction pin that is configured to be aligned with the through hole of the one or more than one support of the tray of the tray assembly. The lifting mechanism is configured to move the one or more than one extraction pin through the through hole of the one or more than one support, to abut one or more than one float arranged or arrangeable in the reservoir of the tray and to lift the one or more than one float out of the tray. The float is preferably abutted by the extraction pins at the bottom surface of float, more preferably a recess arranged in the bottom surface of the float.

The supports of the tray and the recesses of the floats provide alignment means for the extraction pins of the lifting mechanism.

A horticultural system is provided comprising a tray assembly according to any of the above embodiments and a lifting mechanism according to any of the above embodiments. The lifting mechanism may thus be comprised by a frame of the tray or tray assembly but may also be provided as a separate device of the system. The through hole of the one or more than one support of the tray, the one or more than one recess of the optional float and the one or more than one extraction pin of the lifting mechanism are aligned or configured to be aligned for lifting the float out of the tray.

Finally, a horticultural method is provided which comprises usage of a tray, a float, a tray assembly, a lifting mechanism and/or a horticultural system according to any of the embodiments discloses herein. The method may in particular comprise lifting or lowering one or more than one float relative to the tray via a bottom surface of the one or more than one float.

The present invention will now be elucidated with reference to the drawing, in which:
- Fig. 1 depicts a perspective view of a tray assembly according to a first embodiment;
- Fig. 2 depicts a cross-sectional view of the tray assembly of Fig. 1;
- Fig. 3 depicts a cross-sectional close-up of a water inlet section of the tray assembly of Fig. 2;
- Fig. 4 depicts a cross-sectional close-up of a drain section of the tray assembly of Fig. 2;
- Fig. 5 and Fig. 6 depict cutaway side views of the tray assembly of Fig. 1 with and without floats, respectively;
- Fig. 7 depicts a perspective view of a composition of the tray assembly of Fig. 1;
- Fig. 8 and Fig. 9 depict cutaway side views of a drain section of the tray assembly of Fig. 1 with and without floats, respectively;
- Fig. 10 depicts a further perspective view of a composition of the tray assembly of Fig. 1;
- Fig. 11 depicts a perspective view of a tray assembly according to a second embodiment;
- Fig. 12 depicts a cross-sectional view of the tray assembly of Fig. 11;
- Fig. 13 depicts a cross-sectional close-up of a water inlet section of the tray assembly of Fig. 12;
- Fig. 14 depicts a cross-sectional close-up of a drain section of the tray assembly of Fig. 12;
- Fig. 15 and Fig. 16 both show perspective views of the tray assembly of Fig. 11;
- Fig. 17 and Fig. 18 depict perspective views of a watering device in accordance with the present invention;
- Fig. 19 depicts a cross-sectional view of a tray assembly with a lifting mechanism;
- Fig. 20 depicts a float with recesses in its bottom surface;
- Fig. 21 depicts a detailed view of a lifting mechanism engaging a recess of a float through a through hole in a support of a tray; and
- Fig. 22A and 22B depicts a cross-sectional view of an extraction pin of a lifting mechanism abutting and lifting a float out of a tray.

The following reference signs are used throughout.
- 1: tray assembly
- 2: frame
- 3: tray
- 5: reservoir
- 7: float
- 8: accommodation
- 9: water inlet section
- 10: bottom surface
- 11: water flow guide
- 12: recess
- 13: downward sloping guide surface
- 15: throughflow opening
- 17: chamber
- 21: throughput reservoir
- 23: mesh
- 25: water permeable membrane
- 26: flap
- 29: top surface
- 31: recess
- 33: bottom
- 35: support
- 36: edge
- 37: through hole
- 39: pin
- 40: lifting mechanism
- 41: drain
- 43: additional mesh
- 44: connection means
- 45: watering device
- 47: water outlet
- 49: faucet aerator
- 50: extraction or harvesting station
- 51: dripper
- 52: horticultural system

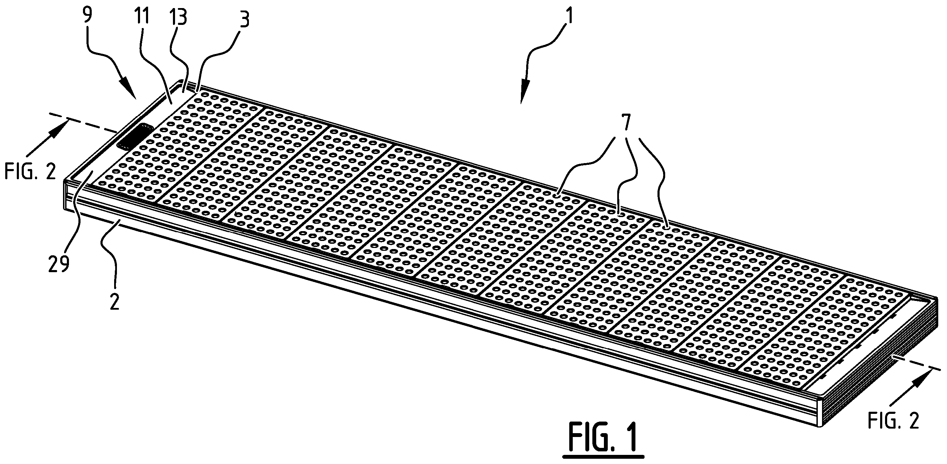

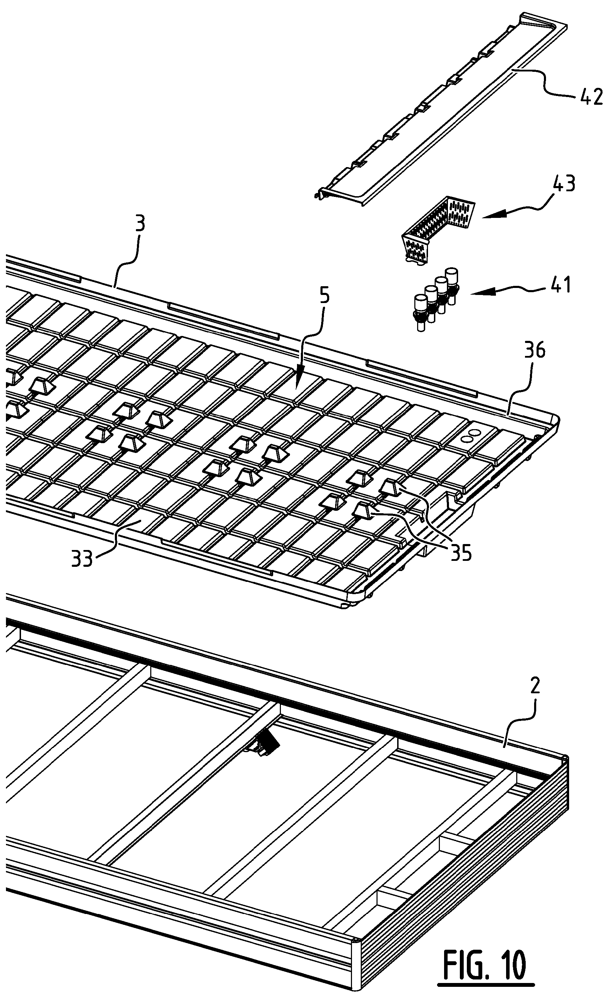

Referring now to Fig. 1 to Fig. 10 of the appended drawings, there is shown a tray assembly 1 according to a first embodiment.

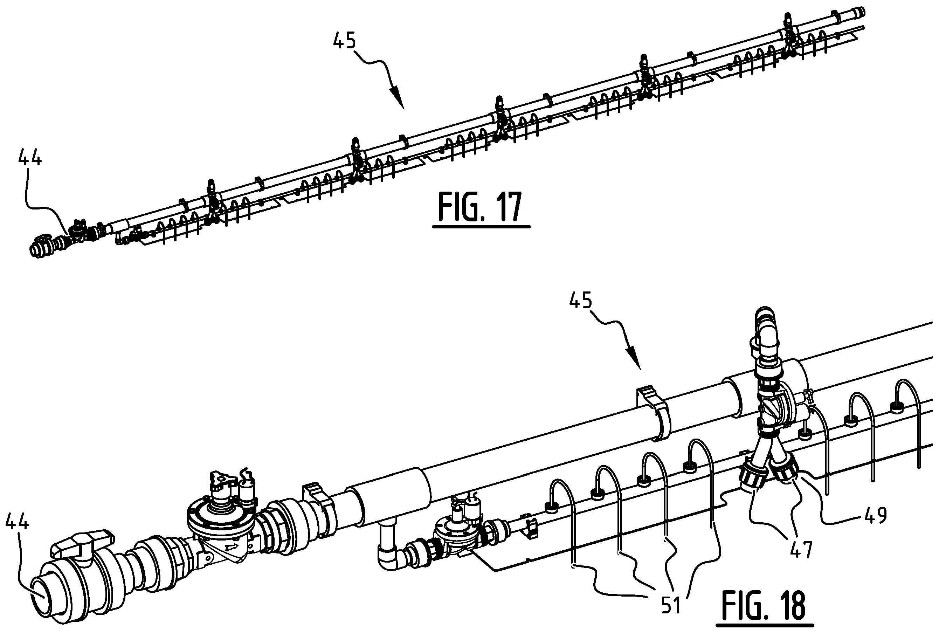

The tray assembly 1 comprises a tray 3 having a reservoir 5 configured to contain water therein. The water is preferably a nutrient solution (i.e. water having plant nutrients dissolved therein), which may be fed into the reservoir 5 of the tray 3 using a watering device 45 as depicted in Fig. 17 and Fig. 18.

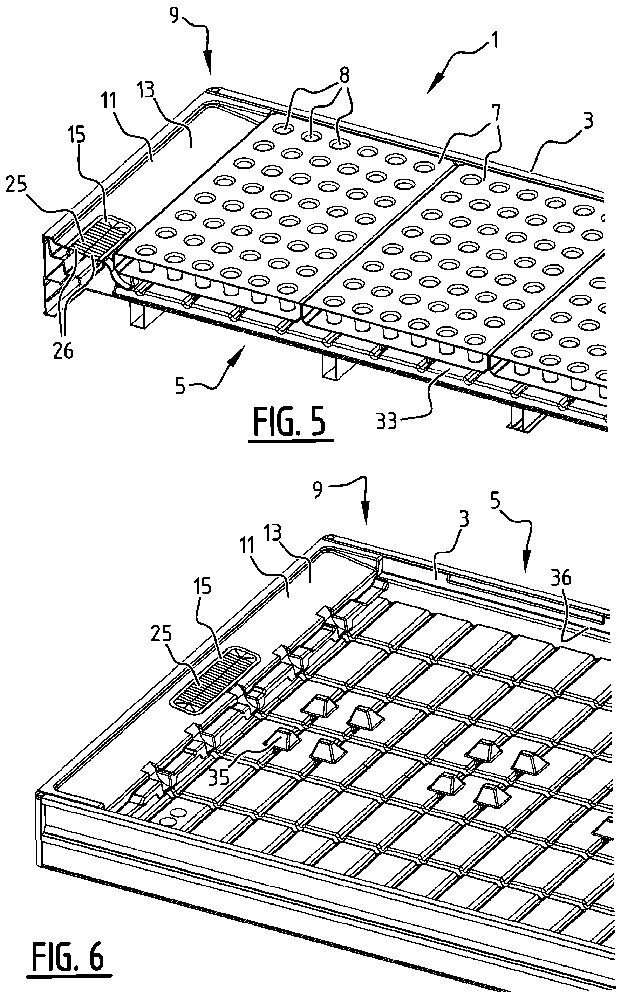

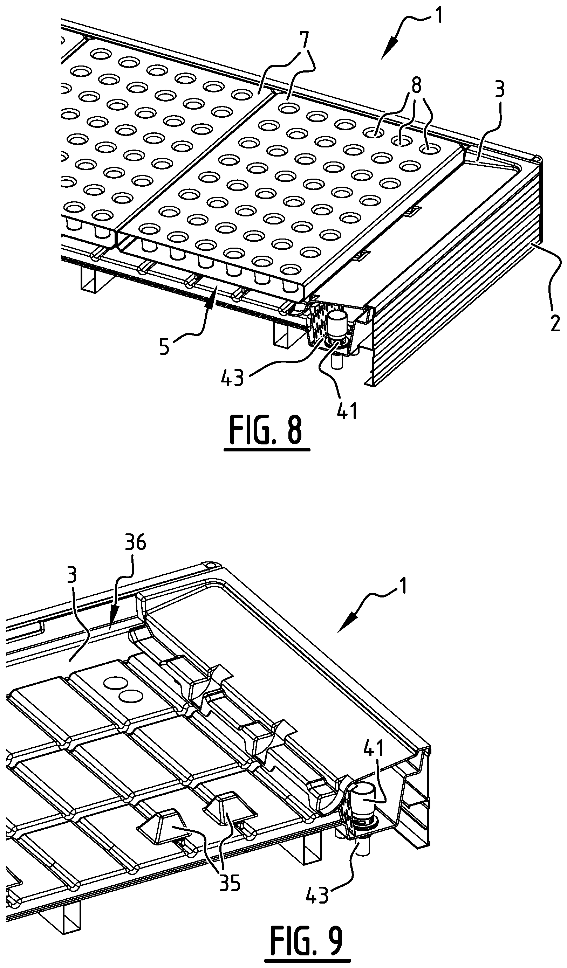

As is best depicted in Fig. 1, the tray assembly 1 comprises a plurality of floats 7. Each one of the floats 7 comprises a plurality of accommodations 8 (see Fig. 5 and Fig. 8), of which each one is configured to receive at least one plant (not shown).

The floats 7 are configured to be separately arranged adjacent to one another in the reservoir 5. The reservoir 5 of the tray 1 is correspondingly configured to receive the floats 7. Adjacent floats 7 may abut one another or have an intermediate distance of, at most, approximately 2 mm or less. As such, any water present in the reservoir 5 of the tray 3 is effectively shielded from an external environment of the tray assembly 1.

Here, the phrase "shielded from an external environment" should be understood as relating to both ambient light and ambient air present within the external environment. The plurality of floats 7 - that abut one another or have only a relatively small intermediate distance between one another - prevent ambient light from entering into the reservoir 5 of the tray 3. Because algae requires light to grow and develop, this development of algae within the reservoir 5 of the tray is prevented or at least reduced, at least when there is water present in the reservoir 5.

Water contained in the reservoir 5 may moreover comprise oxygen that is dissolved therein and absorbed by the plants, in particular when these plants are not exposed to light and not performing photosynthesis. When the water in the reservoir 5 is exposed to ambient air, gas exchange between the water in the reservoir 5 and the external environment results in said dissolved oxygen to be lost from the water in the reservoir 5 through diffusion. **In** contrast, when the water in the reservoir 5 is shielded by the plurality of floats 7, the exchange of gas between the water in the reservoir 5 and the external environment is impeded. While an exchange of gas between said water and any air trapped in the reservoir 5 may still occur, this trapped air becomes saturated with oxygen over time. As a result, a state of equilibrium is obtained with respect to the concentration of oxygen dissolved in the water in the reservoir 5 and oxygen present in the air trapped in the reservoir 5, resulting in substantially no net gas exchange being present.

The advantages of shielding the reservoir 5 has been elucidated here above based on examples that assume water is present in the reservoir 5. Nevertheless, the shielding provided by the plurality of floats 7 is also advantageous when a humid environment is to be maintained within the reservoir 5. This may be the case when the tray assembly 1 is applied in a horticultural system 52 based on, for example, an ebb and flow watering scheme. In an ebb and flow watering scheme, the reservoir 5 is first filled with water and subsequently drained. During the flow state, the roots of the plants may absorb water. In the ebb state, a humid environment exists in the reservoir 5 from which the plants may still absorb moisture. This humid environment in the reservoir is maintained with the shielding of the reservoir 5 provided by the plurality of floats 7.

Because the reservoir 5 of the tray 3 is shielded by the plurality of floats 7, water cannot be fed directly into the reservoir 5 without removal of at least one of the floats 7. Removal of at least one of the floats 7 in not desired, because it would temporarily lift the shielding of the reservoir 5 provided by the floats 7. The controlled environment of humidity and oxygen being trapped would get lost. Lifting floats 7 is also impractical in a commercial, highly automated, agricultural setting.

The tray 3 of the tray assembly 1 therefore comprises a water inlet section 9 via which the reservoir 5 of the tray may be filled. The water inlet section 9 is arranged adjacent to - and fluidly connected with - the reservoir 5 that is covered (i.e. shielded) by the plurality of floats 7. The water inlet section 9 and the reservoir 5 may be considered to collectively define an interior of the tray 3.

The water inlet section 9 comprises a water flow guide 11 that guides water flowing into the water inlet section 9 from which it flows into the reservoir 5. In the embodiment depicted in Fig. 1 to Fig. 10, the water flow guide 11 comprises a top surface 29. The top surface 29 is elevated above a level of a bottom 33 of the tray 3 to approximately the same height level of the floats 7.

The water flow guide 11 comprises a throughflow opening 15 configured to guide water for filling the reservoir 5 into a chamber 17 of the water inlet section 9 that is in fluid connection with the reservoir 5. The chamber 17 of the water inlet section 9 is situated beneath the aforementioned top surface 29 of the water flow guide 11. Consequently, any water (or alternatively a humid environment) present in the (chamber 17 of the) water inlet section 9 is shielded from the aforementioned external environment of the tray assembly 1.

The throughflow opening 15 of the water flow guide 11 moreover comprises a water permeable membrane 25 that substantially closes off the throughflow opening 15 and thereby shield water within the (chamber 17 of the) water inlet section 9 from the external environment.

As most clearly shown in Fig. 5, the water permeable membrane 25 comprises at least one flap 26 of a flexible material, which is moreover preferably a non-translucent material to shield water in the water inlet section 9 from ambient light. For example, the water permeable membrane 25 may be a sheet of non-translucent silicone having one or more cuts defining the aforementioned one or more than one flap 26. These one or more than one flap 26 may be easily pushed aside by an inbound water flow when the reservoir 5 of the tray 3 is filled via the throughflow opening 15, for example by means of the watering device 45 depicted in Fig. 17 and Fig. 18.

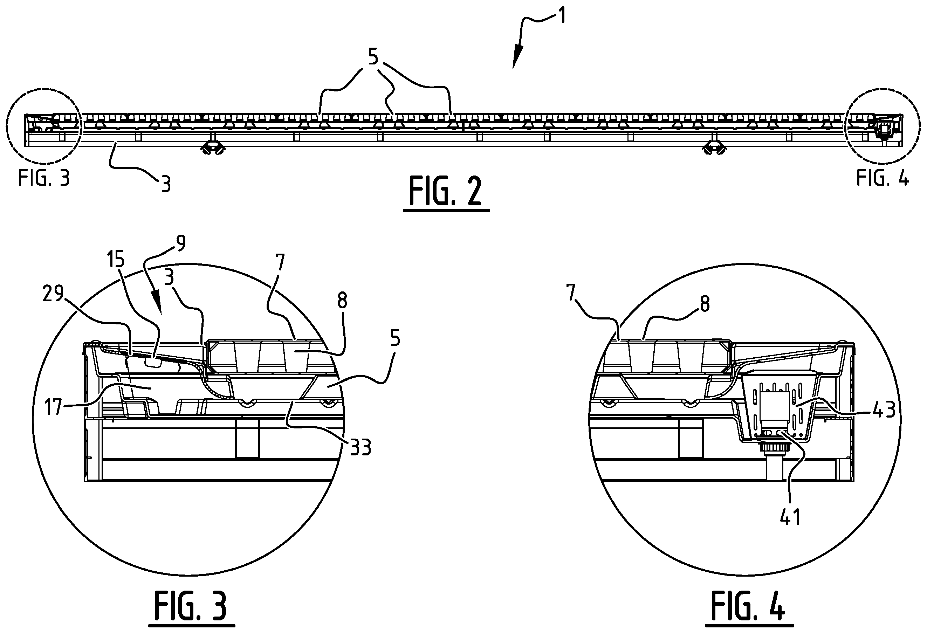

As is best depicted in the cross-sectional close-up of the water inlet section 9 depicted in Fig. 3, the top surface 29 of the water flow guide 11 preferably exhibits a downward slope in a direction toward the reservoir 5 of the tray 3. Any water used for filling the reservoir 5 that missed the throughflow opening 15 of the water flow guide 11 and ended up on the top surface 29 may thus flow into the reservoir 5 via an intermediate space between the water flow guide 11 and a first one among the plurality of floats 7 that is arranged adjacent to the water flow guide 11.

The water flow guide 11 of the aforementioned first embodiment of the tray assembly 1 may be considered to be the downward sloping guide surface 13 in the sense of the appended claims.

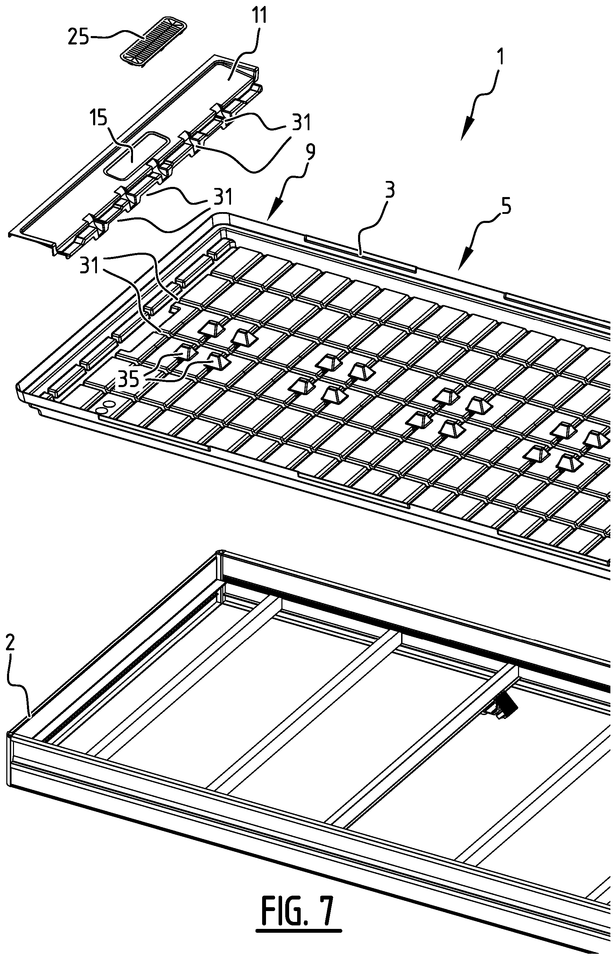

Fig. 7 depicts a perspective view of a constructive composition of the tray assembly 1, in particular the tray 3 thereof. As can be discerned from this figure, the water flow guide 11 may be a component distinct from the tray 3 that is moreover removably insertable into the tray 3. The water flow guide 11 moreover comprises one or more than one recess 31 that - when the water flow guide 11 is inserted into the tray 3 - defines the fluid connection between the reservoir 5 and the water inlet section 9 of the tray 1. It is also conceivable that the aforementioned recess 31 is alternatively comprised by the tray to define the fluid connection between the reservoir 5 and the water inlet section 9. As indicated in Fig. 7, the recess 31 can fluidly connect a top surface 29 of the water flow guide 11 and/or the chamber 17 to the reservoir 5.

Fig. 8 and Fig. 9 moreover show the tray 3 comprising one or more than one drain 41 configured to drain water from the reservoir 5 of the tray 3. In accordance with certain embodiments, the drain 41 may comprise a siphon such as a bell siphon that automatically drains the reservoir 5 of the tray 3 when a water level in the reservoir 5 reaches a maximum water level, and maintain a minimum water level for creating a humid (and preferably oxygen rich) environment in the reservoir 5 after draining of the reservoir 5 has been completed.

The one or more than one drain 41 preferably comprises an additional mesh 43 that blocks debris from entering into the drain 41 and prevent clogging of the drain 41. In the figures of the drawing, the drain 41 and the water inlet section 9 are arranged at opposite sides of the tray 3. Alternatively, the drain 41 may be arranged at the water inlet section 9, or at least the same side of the tray 3 at which the water inlet section 9 is arranged.

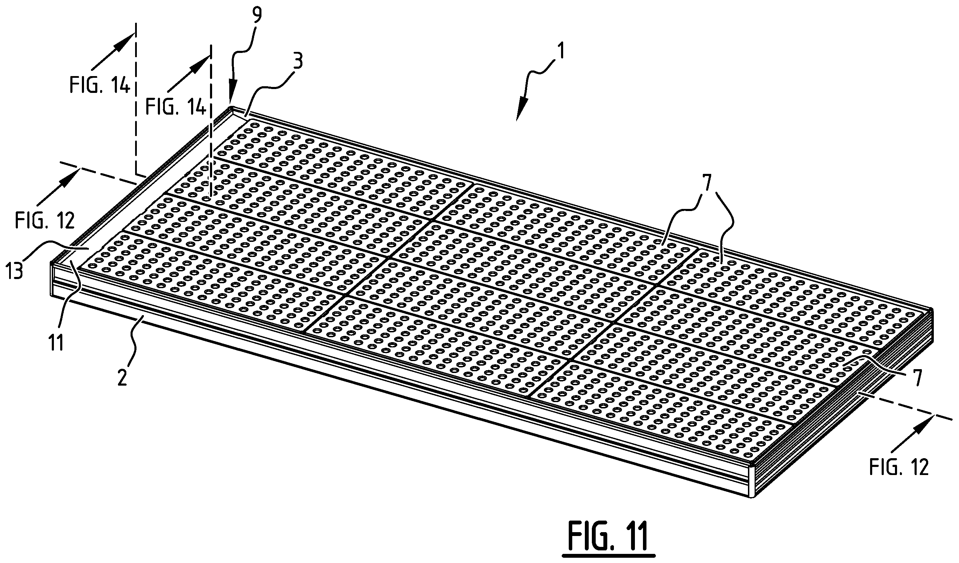

In Fig. 11 to Fig. 16 of the appended drawing, an alternative embodiment of the tray assembly 1 is depicted. In contrast to the embodiment of the tray assembly 1 depicted in Fig. 1 to Fig. 10, in this embodiment the water flow guide 11 defines a downward sloping guide surface 13 configured to guide water received on the water flow guide 11 into the reservoir 5 and under the one or more than one float 7.

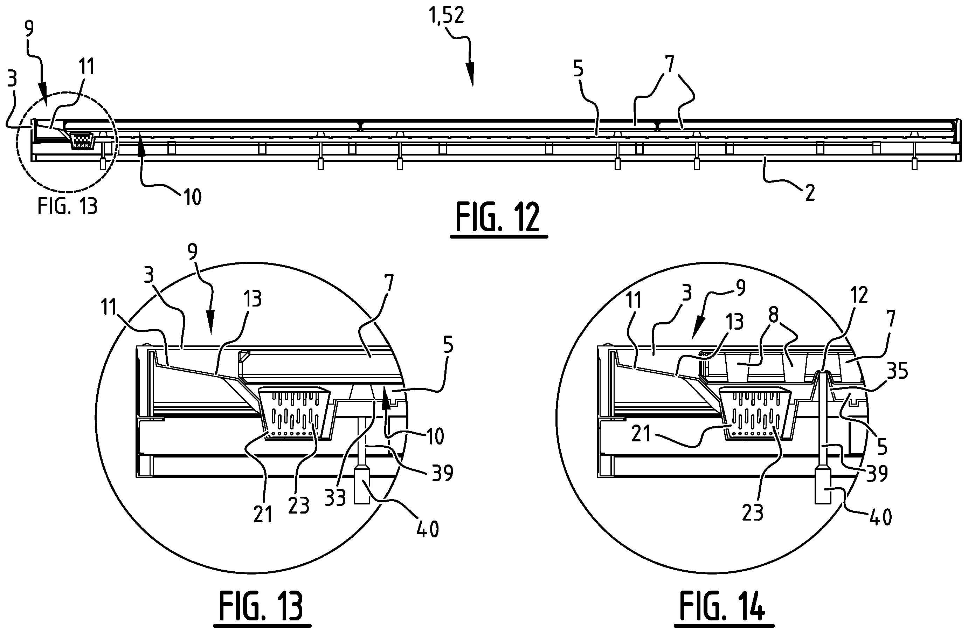

Fig. 12 of the appended drawing depicts a cross-sectional view in longitudinal direction of the tray assembly 1 including the tray 3. Fig. 13 shows a cross-sectional closeup of the water inlet section 9 of the tray 3 of the tray assembly 1 depicted in Fig. 12.

From this figure, it can be discerned that water which is fed into the water inlet section 9 hits the downward sloping guide surface 13, and flows along this downward sloping guide surface 13 and into the reservoir 5 underneath the plurality of floats 7.

The downward sloping guide surface 13 of the water flow guide 11 extends along an entire length of the water inlet section 9 and debouches into at least a part of the reservoir 5 of the tray 3. The part of the downward sloping guide surface 13 that is situated in the water inlet section 9 is elevated above a maximum water level of the reservoir 5. As such, no water can collect on this part of the downward sloping guide surface 13. In contrast, the part of the downward sloping guide surface 13 that is situated in the reservoir 5 is located beneath a maximum water level of the reservoir 5, and thus in contact with water present in the reservoir 5. Nevertheless, here the water here is shielded by the plurality of floats 7 as explained above.

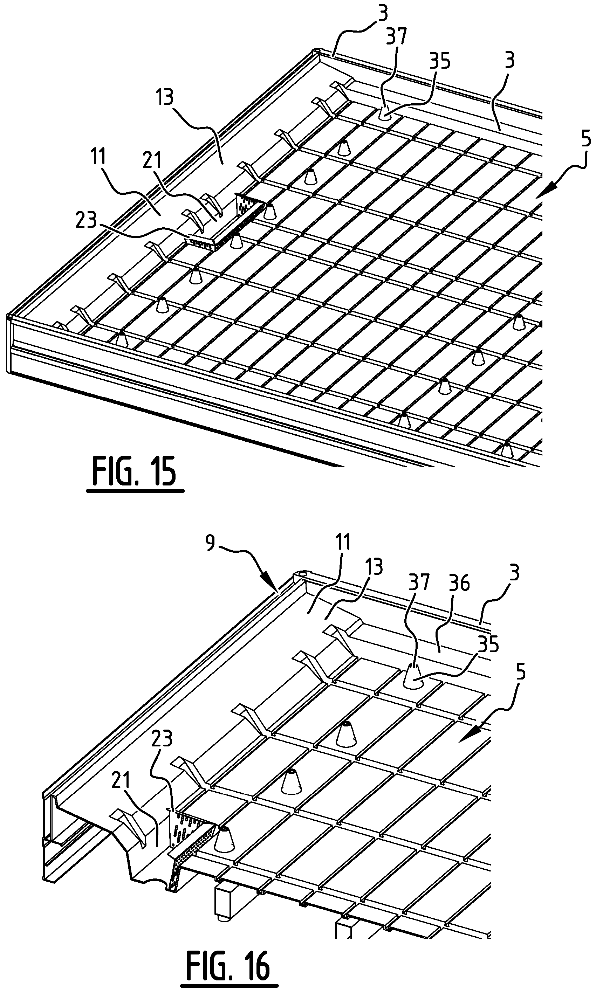

As is best illustrated in Fig. 15 of the appended drawing, the downward sloping guide surface 13 of the water flow guide 11 extends substantially along an entire side of the tray 3, the side here preferably referring to a width of the tray 3. Because water may be fed into the water inlet section 9 along this entire side, this advantageously allows for the reservoir 5 of the tray 3 to be filled relatively quickly.

Fig. 15 and Fig. 16 moreover show the tray 3 comprising a throughput reservoir 21 arranged downstream of the downward sloping guide surface 13 of the water flow guide 11. Water that is fed into the water inlet section 9 first flows through this throughput reservoir 21 before flowing into the reservoir 5 of the tray 3. The throughput reservoir 21 comprises a mesh 23 that blocks debris and thereby prevent said debris from flowing into the reservoir 5.

In particular Fig. 7, 9, 10, 15, 16, 19 and 22A-B show the bottom 33 of the tray 3 comprising one or more than one support 35 protruding upward relative to the bottom 33 of the tray. The one or more than one support 35 is configured to support the one or more than one float 7 above the bottom 33 of the tray 3, for example when the reservoir 5 is empty or contains only a small (minimum) amount of water. The above described humid environment may be maintained between the bottom 33 of the tray 3 and the one or more than one float 7.

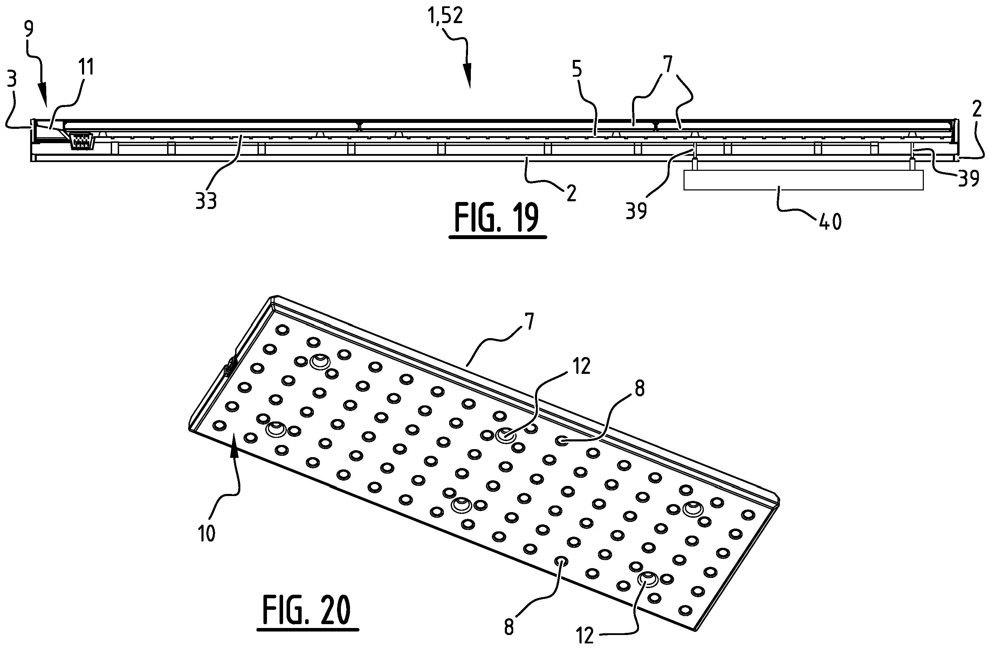

The supports 35 depicted in Fig. 15 and 16 each comprise a through hole 37. As is best depicted in Fig. 13 and Fig. 14, an extraction pin 39 comprised by a lifting mechanism 40 may be actuated to move through this through hole 37 of the tray 3 and to abut the float 7, to thereby lift the float 7 upward allowing it to be removed from the reservoir 5 of the tray 3. Fig. 19, 20 and 22A-B further illustrate aspects of the lifting mechanism 40.

The lifting mechanism 40 may comprise a plurality of extraction pins 39 that are either aligned with, or at least configured to be aligned with, each of the plurality of through holes 37 of the respective supports 35. For example, the lifting mechanism 40 may be integrated into the frame 2 that supports at least the tray 3 of the tray assembly 1, and therefore be comprised by said tray assembly 1. Alternatively, the lifting mechanism 40 may be part of an extraction or harvesting station 50. In these embodiments, the tray assembly 1 may be movable (e.g. by the frame 2 of the tray assembly 1 comprising wheels) over the extraction or harvesting station 50, after which the through holes 37 of the supports 35 may be aligned with the extraction pins 39, which are then actuated to lift at least one float 7 out of the reservoir 5 of the tray 3 as described hereabove. Remaining floats 7 may thereafter be manually removed from the reservoir 5 without using a lifting mechanism 40, because these floats 7 can be easily grasped by hand when at least one of the floats 7 has already been removed from the reservoir 5 of the tray 3. Once the lifting mechanism 40 has lifted a float 7 from the tray 3 at the extraction or harvesting station 50, further floats 7 may be floated that position in the tray 3 to be subsequently lifted out of the tray 3 by the lifting mechanism 40. Alternatively, the lifting mechanism 40 can move along the tray 3 to positions of other floats 7. In general, the lifting mechanism 40 and the tray 3 can move relative to each other so that all floats 7 may be lifted out of the tray 3 for further handling. For example, once a particular float 7 is lifted, a handling device (not illustrated) of the extraction or harvesting station 50 can take over the float 7 from the lifting mechanism 40 to perform further automated tasks in the horticultural system 52. Such a handling device may comprise protrusions arrangeable below the float 7, e.g. in a horizontal direction, when the float 7 is vertically lifted by the lifting mechanism 40 above the tray 3 to carry the float 7. The float 7, including plants arranged in the accommodations 8 thereof, can then be processed further in an automated fashion using known technologies.

Referring now in particular to Fig. 19 to 22B, the lifting mechanism 40 comprises the extraction pin 39 to be aligned with the through hole 37 in the support 35 of the tray 3. The extraction pin 39 can be moved upwards and downwards by the lifting mechanism 40 to lift floats out of the tray 3 or lowered floats into the reservoir 5 of the tray 3.

Fig. 19 depicts a cross-sectional view of a tray assembly 1 with a lifting mechanism 40. The tray assembly 1 otherwise conforms to that of Fig. 11. The lifting mechanism 40 is provided at a side of the tray 3 that is opposite the water inlet section 9. However, other positions are conceivable and the lifting mechanism 40 may be implemented to be moveable by known means, such as wheels and a drive, to take on different positions along the tray 3.

Fig. 20 depicts a float with recesses 12 in its bottom surface 10. The float 7 further comprises accommodations 8 for receiving plants that are to be cultivated.

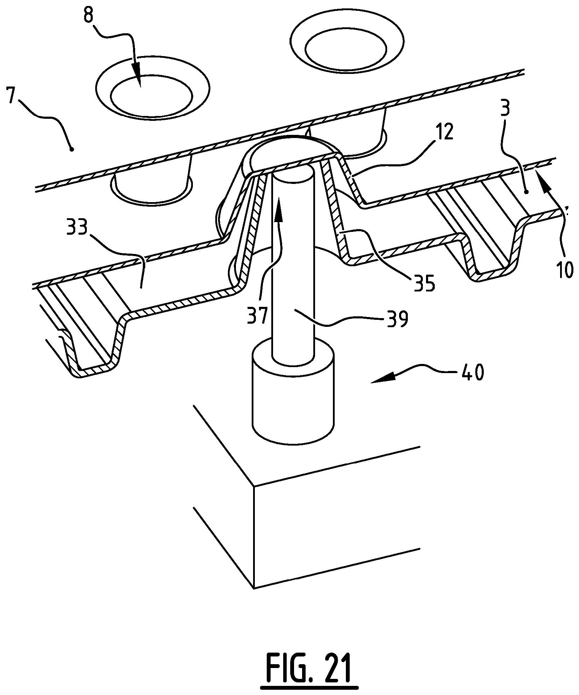

Fig. 21 depicts a detailed view of a lifting mechanism 40 engaging a recess 12 of a float 7 according to Fig. 20. The extraction pin 39 of the lifting mechanism 40 can be aligned with the through hole 37 in the support 35 protruding from the bottom 33 of the tray 3. Once aligned, the extraction pin 39 can be moved to abut the float 7, in particular the recess 12 arranged in the bottom surface 10 of the float 7. The float 7 can then be lifted out of the tray 3.

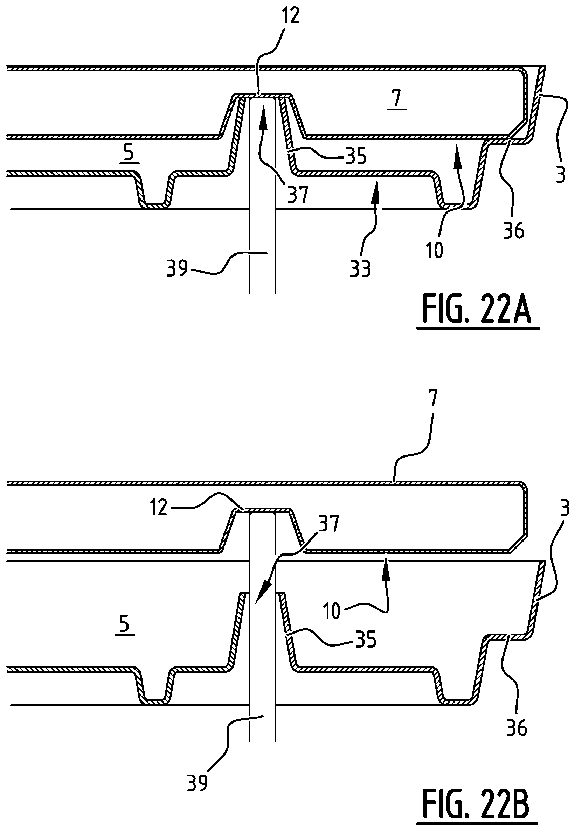

Fig. 22A and 22B depicts this process in a cross-sectional view. The extraction pin 39 of the lifting mechanism 40 abuts and lifts the float 7 out of the tray 3. The support 35 of the tray 3 in conjunction with the recess 12 of the float 7 here define the level at which the float 7 can be arranged in the reservoir 5. When such recesses 12 are omitted from the float 7, e.g. a flat bottom surface 10 would be used, the only the supports 35 of the tray 3 define the level at which floats 7 are arrangeable in the reservoir 5.

Additionally or alternatively, the tray 3 may comprise one or more than one edge 36 onto which floats 7, in particular the bottom surface 10 thereof, may come to rest in the reservoir 5 of the tray 3. Such edge 36 is also shown in Fig. 6, 7, 9, 10 and 16.

Referring now to Fig. 17 and 18, there is shown a watering device 45 for filling the reservoir 5 of the tray assembly 1 via the water inlet section 9 as described hereabove. The watering device 45 comprises connection means 44 for connecting the watering device 45 to a water supply (not shown).

As can be derived from Fig. 18, the watering device 45 comprises one or more than one water outlet 47. The watering device 45 is configured to be arranged above the here above described tray assemblies 1 with the one or more than one water outlet 47 being aligned with the water inlet sections 9 of these respective tray assemblies 1. The one or more than one water outlet 47 is configured to output a relatively large waterflow for filling the reservoir 5 of a given tray assembly 1, which makes the watering device 45 suitable for watering schemes in which the reservoir 5 is to be quickly filled and optionally drained thereafter (e.g. ebb and flow watering). Moreover, the watering device 45 comprises a plurality of drippers 51 that each output a relatively small water flow for alternative watering schemes, such as watering schemes in which water is continuously fed into the reservoir 5 and simultaneously drained from this reservoir 5.

The one or more than one water outlet 47 moreover comprises a faucet aerator 49. The faucet aerator 49 aerates the outbound waterflow with ambient air including oxygen, which may be absorbed by plants. A further advantage of faucet aerator 49 is that the outbound water flow of the water outlet 47 is made more consistent and softened, which further decreases the likelihood of water being splashed during filing of the reservoir 5 of the tray assembly 1 as described hereabove.

The present disclosure moreover relates to a horticultural system 52 comprising one or more than one tray 3 or tray assembly 1 as described hereabove and the watering device 45, which may optionally comprise the hereabove described faucet aerator 49, and/or the lifting mechanism 40.

The present disclosure moreover relates to a horticultural method comprising usage of at least one of the tray assembly 1, its tray 3 or float 7, and/or the horticultural system 52 according to any one of embodiments disclosed herein and/or the hereabove watering device 45.

It is noted here that the scope of protection for the developments described in the present disclosure are by no means limited to any particular feature of the embodiments described above and illustrated in the appended drawing. The skilled person will acknowledge that certain features disclosed herein in relation to one embodiment of the tray assembly 1 may also be applied in another embodiment of this tray assembly 1. For example, it is entirely conceivable that the embodiment of the tray assembly depicted in Fig. 1 to 10 comprises support 35 with through holes 37.

The following numbered examples summarize aspects of the technology disclosed herein.
Example 1. Tray for a tray assembly for cultivating horticultural crops, the tray comprising:
   - a reservoir configured to contain water and to receive one or more than one float in the reservoir to substantially shield water contained in the reservoir from the external environment, wherein the one or more than one float is configured to receive one or more than one plant and to be arranged in the reservoir and substantially shield water contained in the reservoir from the external environment; and
   - a water inlet section that is arranged adjacent the reservoir and comprises a water flow guide, wherein the water flow guide at least one of:
      - defines a downward sloping guide surface configured to guide water received on the water flow guide into the reservoir under a level at which the one or more than one float is arrangeable in the reservoir; and
      - comprises a throughflow opening configured to guide water into a chamber of the water inlet section that is in fluid connection with the reservoir, wherein the throughflow opening comprises a water permeable membrane configured to substantially shield water within the water inlet section from the external environment.
Example 2. Tray according to example 1, wherein the downward sloping guide surface extends substantially along an entire side of the tray.
Example 3. Tray according to example 1 or 2, wherein at least of a part of the downward sloping guide surface that is arranged in the water inlet section is arranged above a maximum water level of the reservoir.
Example 4. Tray according to any of the foregoing examples, comprising a throughput reservoir arranged downstream of the downward sloping guide surface.
Example 5. Tray according to example 4, further comprising a mesh arranged at the throughput reservoir.
Example 6. Tray according to any of the foregoing examples, wherein the water permeable membrane comprises one or more than one flap of a flexible material.
Example 7. Tray according to example 6, wherein the flexible material of the water permeable membrane is non-translucent material.
Example 8. Tray according to any of the foregoing examples, wherein a top surface of the water flow guide exhibits a downward slope in a direction toward the reservoir of the tray. Example 9. Tray according to any of the foregoing examples, wherein the water flow guide is removably insertable into the tray.
Example 10. Tray according to example 9, wherein at least one of the water flow guide and the tray comprises a recess defining the fluid connection between the reservoir and the water inlet section of the tray.
Example 11. Tray assembly for cultivating horticultural crops comprising:
   - a tray according to any of the foregoing examples; and
   - one or more than one float configured to receive one or more than one plant, wherein the one or more than one float is arranged or arrangeable in the reservoir of the tray to substantially shield water contained in the reservoir from the external environment.
Example 12. Horticultural system comprising:
   - a tray according to any of the examples 1 - 10 or a tray assembly according to example 11; and
   - a watering device configured to introduce water into the water inlet section of the tray.
Example 13. Horticultural system according to example 12, wherein a water outlet of the watering device comprises a faucet aerator configured to aerate a water stream of the water outlet.
Example 14. Horticultural method comprising usage of a tray according to any of the examples 1-10, a tray assembly according to example 11 or a horticultural system according to example 12 or 13.
Example 15. Tray for a tray assembly for cultivating horticultural crops, the tray comprising:
   - a reservoir configured to contain water and to receive one or more than one float in the reservoir to substantially shield water contained in the reservoir from the external environment, wherein the one or more than one float is configured to receive one or more than one plant and to be arranged in the reservoir and substantially shield water contained in the reservoir from the external environment;
   - a drain configured to drain water from the reservoir when a water level in the reservoir reaches a maximum water level; and
   - one or more than one support protruding upward relative to a bottom of the reservoir and configured to support the one or more than one float when received in the reservoir, wherein the one or more than one support comprises a through hole arranged above the maximum water level of the reservoir.
Example 16. Tray of example 15, wherein the through hole is arranged at a top surface of the one or more than one support.
Example 17. Tray of example 15 or 16, further comprising a water inlet section that is arranged adjacent the reservoir and comprises a water flow guide, wherein the water flow guide at least one of:
   - defines a downward sloping guide surface configured to guide water received on the water flow guide into the reservoir under a level at which the one or more than one float is arrangeable in the reservoir; and
   - comprises a throughflow opening configured to guide water into a chamber of the water inlet section that is in fluid connection with the reservoir.
Example 18. Float for a tray assembly for cultivating horticultural crops, wherein the float is configured to be arranged in the reservoir of a tray according to any of the examples 15-17 to substantially shield water contained in the reservoir from the external environment and comprises:
   - one or more than one accommodation configured to receive one or more than one plant; and
   - one or more than one recess arranged at a bottom surface of the float and configured to receive the one or more than one support of the tray.
Example 19. Float according to example 18, wherein the one or more than one recess is formed as a blind hole extending into the float from the bottom surface of the float.
Example 20. Float according to example 18 or 19, wherein the one or more than one accommodation is formed as a through hole extending from the bottom surface of the float to a top surface of the float.
Example 21. Float according to any of the examples 18-20, wherein a cross-section of the one or more than one recess is larger than a cross-section of the one or more than one accommodation. Example 22. Float according to any of the examples 18-21, wherein a first two-dimensional pattern defined by the one or more than one recess differs from a second two-dimensional pattern defined by the one or more than one accommodation.
Example 23. Tray assembly for cultivating horticultural crops comprising:
   - a tray according to any of the examples 15-17; and
   - one or more than one float according to any of the examples 18-22.
Example 24. Tray assembly according to example 23, wherein the one or more than one recess of the float is recessed from the bottom surface of the float over a distance smaller than a height of the one or more than one support of the tray.
Example 25. Tray assembly according to example 23 or 24, wherein a cross-section of the one or more than one support, in particular measured at its top, of the tray is larger than a cross-section of the one or more than one accommodation of the float, in particular measured at the bottom surface of the float.
Example 26. Tray assembly according to any of the examples 23-25, wherein a third two-dimensional pattern defined by the one or more than one support of the tray corresponds to a first two-dimensional pattern defined by the one or more than one recess of the float and differs from a second two-dimensional pattern defined by the one or more than one accommodation.
Example 27. Tray assembly according to any of the examples 23-26, further comprising:
   - a lifting mechanism comprising one or more than one extraction pin that is aligned, or configured to be aligned, with the through hole of the one or more than one support, wherein the lifting mechanism is configured to move the one or more than one extraction pin through the through hole of the one or more than one support and to abut one or more than one float arrangeable or arranged in the reservoir of the tray, in particular the one or more than one recess thereof, and thereby lift the one or more than one float out of the tray.
Example 28. Tray assembly according to example 27, wherein a fourth two-dimensional pattern defined by the one or more than one extraction pin of the lifting mechanism corresponds to at least one of the third two-dimensional pattern defined by the one or more than one support of the tray and the first two-dimensional pattern defined by the one or more than one recess of the float. Example 29. Tray assembly according to example 27 or 28, wherein the lifting mechanism is comprised by a frame configured to support at least the tray.
Example 30. Lifting mechanism of or for a tray assembly according to any of the examples 23-29, wherein the lifting mechanism comprises one or more than one extraction pin that is aligned, or configured to be aligned, with the through hole of the one or more than one support of the tray of the tray assembly, wherein the lifting mechanism is configured to move the one or more than one extraction pin through the through hole of the one or more than one support, to abut one or more than one float arranged or arrangeable in the reservoir of the tray and to lift the one or more than one float out of the tray.
Example 31. Horticultural system comprising:
   - a tray assembly according to any of the examples 23-29; and
   - a lifting mechanism according to example 30,
   wherein the through hole of the one or more than one support of the tray, the one or more than one recess of the optional float and the one or more than one extraction pin of the lifting mechanism are aligned or configured to be aligned for lifting the float out of the tray.
Example 32. Horticultural method comprising usage of a tray according to any of the examples 15-17, a float according to any of the examples 18-22, a tray assembly according to any of the examples 23-29, a lifting mechanism according to example 30 or a horticultural system according to example 31.
Example 33. Horticultural method of example 32, comprising lifting or lowering one or more than one float relative to the tray via a bottom surface of the one or more than one float.

The scope of protection is exclusively determined based on the limitations of the appended independent claims, but may, in some jurisdictions, even encompass obvious alternatives for features in the independent claims. Other variations for specifically described elements, components and functionalities, that may also be embodied within the scope of the appended claims of the present disclosure, have been at least hinted at in the above embodiment description or the skilled person may be considered to be able to contemplate these variations within the range of this skilled person's general knowledge. This exemplary reference to alternative embodiments substantiates that any limitation to any specific feature, that is not defined as a limitation in the independent claims, is unwarranted.

## Claims

1. Tray (3) for a tray assembly (1) for cultivating horticultural crops, the tray (3) comprising:
- a reservoir (5) configured to contain water and to receive one or more than one float (7) in the reservoir (5) to substantially shield water contained in the reservoir (5) from the external environment, wherein the one or more than one float (7) is configured to receive one or more than one plant and to be arranged in the reservoir (5) and substantially shield water contained in the reservoir (5) from the external environment; and
- a water inlet section (9) that is arranged adjacent the reservoir (5) and comprises a water flow guide (11), wherein the water flow guide (11) at least one of:
- defines a downward sloping guide surface (13) configured to guide water received on the water flow guide (11) into the reservoir (5) under a level at which the one or more than one float (7) is arrangeable in the reservoir; and
- comprises a throughflow opening (15) configured to guide water into a chamber (17) of the water inlet section (9) that is in fluid connection with the reservoir (5), wherein the throughflow opening (15) comprises a water permeable membrane (25) configured to substantially shield water within the water inlet section (9) from the external environment.

2. Tray (3) according to claim 1, wherein the downward sloping guide surface (13) extends substantially along an entire side of the tray (3).

3. Tray (3) according to claim 1 or 2, wherein at least a part of the downward sloping guide surface (13) that is arranged in the water inlet section (9) is arranged above a maximum water level of the reservoir (5).

4. Tray (3) according to any of the foregoing claims, comprising a throughput reservoir (21) arranged downstream of the downward sloping guide surface (13).

5. Tray (3) according to claim 4, further comprising a mesh (23) arranged at the throughput reservoir (21).

6. Tray (3) according to any of the foregoing claims, wherein the water permeable membrane (25) comprises one or more than one flap (26) of a flexible material.

7. Tray (3) according to claim 6, wherein the flexible material of the water permeable membrane (25) is non-translucent material.

8. Tray (3) according to any of the foregoing claims, wherein a top surface (29) of the water flow guide (11) exhibits a downward slope in a direction toward the reservoir (5) of the tray (3).

9. Tray (3) according to any of the foregoing claims, wherein the water flow guide (11) is removably insertable into the tray (3).

10. Tray (3) according to claim 9, wherein at least one of the water flow guide (11) and the tray (3) comprises a recess (12) defining the fluid connection between the reservoir (5) and the water inlet section (9) of the tray (3).

11. Tray assembly (1) for cultivating horticultural crops comprising:
- a tray (3) according to any of the foregoing claims; and
- one or more than one float (7) configured to receive one or more than one plant, wherein the one or more than one float (7) is arranged or arrangeable in the reservoir (5) of the tray (3) to substantially shield water contained in the reservoir (5) from the external environment.

12. Horticultural system (52) comprising:
- a tray (3) according to any of the claims 1 - 10 or a tray assembly (1) according to claim 11; and
- a watering device (45) configured to introduce water into the water inlet section (9) of the tray (3).

13. Horticultural system (52) according to claim 12, wherein a water outlet (47) of the watering device (45) comprises a faucet aerator (49) configured to aerate a water stream of the water outlet (47).

14. Horticultural method comprising usage of a tray (3) according to any of the claims 1-10, a tray assembly (1) according to claim 11 or a horticultural system (52) according to claim 12 or 13.
